# FASCICULE DE BREVET EUROPEEN

(11) **EP 1 590 960 B1**
(45) Date de publication et mention de la délivrance du brevet: **14.04.2010**
(21) Numéro de dépôt: 04708411.6
(22) Date de dépôt: 05.02.2004
(51) Int. Cl.: H04N 7/16, H04N 7/173

(54) **METHODE DE STOCKAGE ET DE TRANSMISSION D'INFORMATIONS GENEREES PAR UN MODULE DE SECURITE**
VERFAHREN ZUR SPEICHERUNG UND ÜBERTRAGUNG VON DURCH EIN SICHERHEITSMODUL GENERIERTEN INFORMATIONEN
METHOD FOR STORING AND TRANSMITTING DATA GENERATED BY A SECURITY MODULE

(30) Priorité: 06.02.2003 CH 1782003
(43) Date de publication de la demande: 02.11.2005
(73) Titulaire: Nagravision SA, 1033 Cheseaux-sur-Lausanne (CH)
(72) Inventeur: WIRZ, Christian, CH-1004 Lausanne (CH); BRIQUE, Olivier, CH-1052 Le Mont-sur-Lausanne (CH); CARREL, Xavier, CH-1052 Le Mont-sur-Lausanne (CH); DUVAL, Grégory, CH-1093 La Conversion (CH); HAUERT, Patrick, CH-1006 Lausanne (CH)
(74) Mandataire: Wenger, Joel-Théophile
(86) Numéro de dépôt international: PCT/IB2004/000344
(87) Numéro de publication internationale: WO 2004/071106

(56) Documents cités:
- EP-A- 0 809 402
- US-A- 4 961 109

## Description

La présente demande concerne le domaine de la transmission d'informations dans un réseau d'appareils reliés à un centre de diffusion et ne disposant pas de liaison de retour permanente.

Dans un réseau de télévision à péage, il est fréquent de se trouver dans une situation dans laquelle les appareils des utilisateurs reçoivent des signaux de contrôle de la part d'un centre de gestion, ces signaux permettant de gérer la sécurité d'accès aux données diffusées.

Des mécanismes complexes ont été développés pour que de nombreuses fonctions individuelles puissent être accessibles sans la nécessité d'une connexion vers un centre de gestion.

Parmi ces mécanismes, l'on peut citer l'accès à des contenus à la demande grâce à la présence d'un crédit à affecter librement sur l'événements de son choix.

Par "contenu" on entend un service d'informations boursière, de météo, de télévision généraliste, d'un événement sportif ou autres. Ces contenus peuvent être diffusés sur des unités d'utilisateurs tels qu'un décodeur de télévision à péage, un ordinateur voire un téléphone portable, un "palm-top", un PDA, une radio, une télévision, une borne multimédia.

Le flux numérique est chiffré afin de pouvoir en contrôler l'utilisation et de définir des conditions pour une telle utilisation. Ce chiffrement est réalisé grâce à des mots de contrôle (Control Words) qui sont changés à intervalle régulier (entre 5 et 30 secondes) afin de dissuader toute attaque visant à retrouver un tel mot de contrôle.

L'unité d'utilisateur comprend un module de sécurité, généralement amovible, qui gère les opérations de sécurité telles que la vérification des droits et le déchiffrement des clés nécessaires (mots de contrôle) au décodeur pour accéder aux données transmises.

La comptabilisation de l'utilisation de tels contenus est aujourd'hui basée sur le principe de l'abonnement ou de l'achat d'événement. L'abonnement permet de définir un droit associé à un ou des canaux de diffusion et permet à l'utilisateur d'obtenir ces canaux en clair si le droit est présent dans son unité de sécurité.

Parallèlement, il est possible de définir des droits propres à un contenu, tel qu'un film ou un match de football. L'utilisateur peut acquérir ce droit (achat par exemple) et ce contenu sera spécifiquement géré par ce droit. Cette méthode est connue sous l'appellation achat impulsif (pay-per-view PPV).

Lors du décryptage des mots de contrôle, il sera vérifié si un droit associé aux conditions d'accès est présent dans le module de sécurité.

Le mot de contrôle est retourné en clair à l'unité d'utilisateur lorsque la comparaison est positive.

Certaines unités d'utilisateurs disposent de voie de retour pour communiquer le choix de l'utilisateur et ainsi acquérir les droits propres à un choix particulier. Cette voie est généralement un modem connecté à une ligne téléphonique ou à un réseau. Du fait de la réticence de certaines personnes pour toute forme de supervision sur la consommation réelle des contenus, le câble n'est tout simplement pas relié vers la prise téléphonique et la transmission des données vers le centre de gestion ne s'effectue pas. Il se peut que cette liaison ne se fait pas pour des raisons pratiques car la prise téléphonique est trop éloignée du poste de télévision.

Lors de l'établissement d'un module de sécurité pour un nouveau client, il est d'usage de lui attribuer un crédit pour lui permettre de tester les fonctionnalités de l'achat impulsif. Ce crédit n'est pas facturé au client car à priori, il ne sera peut être jamais utilisé.

En fonctionnement normal, l'utilisateur achète un ou deux films avec ce crédit et connecte son unité d'utilisateur pour le recharger. A ce moment, le centre de gestion établi la facture pour les deux films consommés et recharge le module d'un montant convenu avec l'utilisateur.

Tant que l'utilisateur ne connecte pas son unité à un réseau, le centre de gestion ne peut facturer la consommation réalisée sur ce crédit initial. De ce fait, l'ensemble des crédits non facturés sur tous les modules de sécurité peut représenter des sommes très importantes.

Des mesures ont été entreprises telles que la proposition de jeux pour inciter, par la distribution d'un prix, les utilisateurs à connecter leur unité.

Le problème se pose d'une manière définitive lorsqu'un changement de module de sécurité est effectué, en général pour des raisons d'évolution technologique. L'opérateur est satisfait quand l'utilisateur procède dans les temps à cet échange et il est difficile d'obliger l'utilisateur à retourner son ancienne carte dans le but de lui facturer des prestations. De ce fait, les données comptables de l'utilisation du crédit contenues dans l'ancien module sont considérées comme perdues.

EP 0 809 402 décrit un module de sécurité externe et remplaçable.

Le but de la présente invention est de pouvoir récupérer les informations concernant l'utilisation du crédit sur un module de sécurité et de transmettre ces informations à un centre de gestion.

Ce but est atteint par une méthode de stockage et de transmission d'informations générées par un premier module de sécurité connecté à une unité d'utilisateur, ce premier module de sécurité comprenant un identifiant unique et des informations représentatives de son fonctionnement, ce premier module pouvant être remplacé par un second module de sécurité, cette méthode comprenant les étapes suivantes:
- détermination des informations spécifiques contenues dans le premier module de sécurité destinées à la transmission,
- transfert de ces informations dans l'unité d'utilisateur,
- stockage de ces informations dans l'unité d'utilisateur,
- remplacement du premier module de sécurité par le deuxième module de sécurité,
- connexion de l'unité d'utilisateur sur un réseau de transmission,
- initialisation d'une communication entre le second module de sécurité et un centre de gestion,
- insertion par l'unité d'utilisateur, d'un bloc de données dans les blocs transmis par le second module, ce bloc comprenant l'identifiant du premier module et les informations spécifiques audit premier module.

Cette méthode permet de récupérer des données dans un premier module de sécurité alors que la connexion avec le centre de gestion est réalisée grâce au second module de sécurité.

L'échange de module de sécurité représente une opportunité de requérir cette connexion pour initialiser le nouveau module.

Les informations spécifiques représentent toutes les données qui sont générées localement et donc ne sont pas connues par le centre de gestion. En plus des informations sur les achats impulsifs, il existe plusieurs compteurs statistiques sur l'utilisation réelle de l'unité d'utilisateur ou décodeur ainsi que des informations concernant les versions des fonctionnalités du module de sécurité.

Lors de cette connexion, le décodeur va constituer un bloc de données dont l'identification sera différente des autres blocs provenant du module de sécurité. Un bloc est constitué d'un en-tête comprenant le numéro unique du module de sécurité et des données qui sont généralement encryptées par une clé, soit de transmission commune à tous les modules de sécurité, soit personnelle c'est-à-dire propre à un module de sécurité. Cette clé peut être de type symétrique ou asymétrique. Le flux de données comprendra donc des blocs avec comme identifiant le nouveau module de sécurité et un bloc avec comme identifiant l'ancien module de sécurité, ceci transmis lors d'une même session.

L'invention sera mieux comprise grâce à la description détaillée qui va suivre et qui se réfère aux dessins annexés qui sont donnés à titre d'exemple nullement limitatif, à savoir:
- la figure 1 illustre les différents éléments de l'invention et
- la figure 2 illustre le traitement des blocs de données.

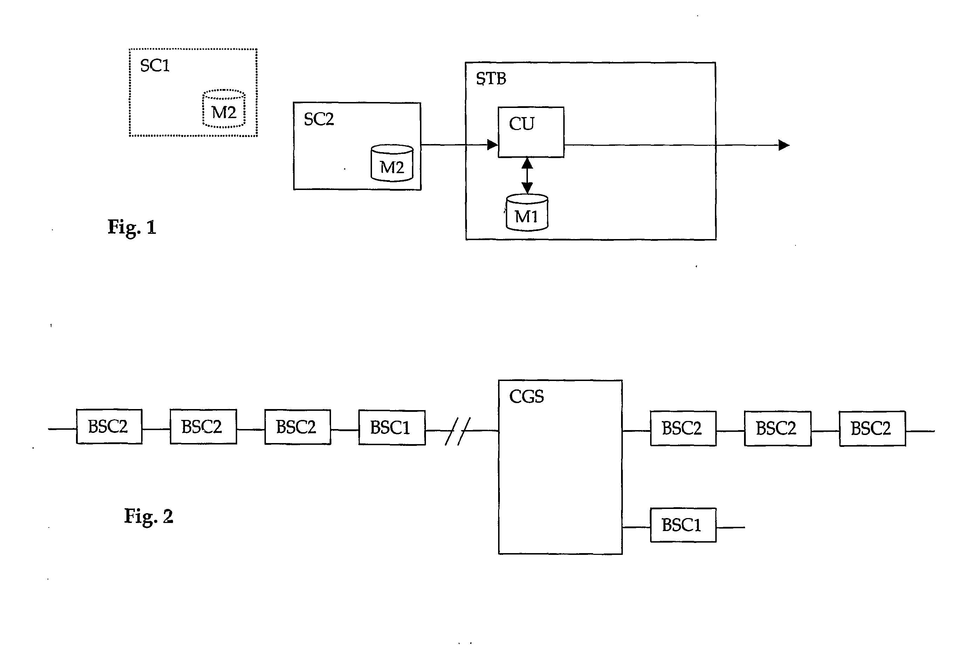

Sur la figure 1, le décodeur STB dispose d'une mémoire non volatile M1. Cette mémoire va servir à stocker les donnés provenant du module de sécurité SC actuellement connecté. Dans notre exemple, le module de sécurité SC1 a été retiré du décodeur STB et remplacé par le nouveau module SC2.

Selon le mode opératoire choisi, les données propres au module de sécurité sont exportées de la mémoire du module de sécurité M2 vers une mémoire M1 destinée à ces données situées dans le décodeur STB. Ce transfert pourra par exemple s'effectuer à chaque modification du contenu de la mémoire M2, ou à intervalle régulier, voire sur commande du centre de gestion.

Associés à ces données, le module de sécurité adjoint un identifiant tel que le numéro unique UA. Les données sont transmises du module de sécurité SC vers l'unité de traitement MC du décodeur. Cette unité gère la communication avec le centre de gestion et le stockage des données dans la mémoire M1.

Les données stockées dans la mémoire M1 peuvent être encryptées par une clé locale propre au décodeur. Ces données sont par exemple accompagnées par une signature calculée par le module de sécurité SC et authentifiant l'ensemble des données. Ainsi, si elles étaient modifiées dans le décodeur, le centre de gestion pourrait facilement détecter une telle modification. La signature utilise une clé asymétrique dont la partie correspondante est contenue dans le centre de gestion. L'identifiant unique permet de retrouver dans la mémoire sécurisée du centre de gestion la clé pour déchiffrer la signature et vérifier si les données reçues sont correctes.

Sur la figure 2 est illustré un exemple des blocs de données BCS transmis vers le centre de gestion. Lors de la connexion du décodeur au centre de gestion, l'unité de traitement MC demande les données au module de sécurité SC connecté et transmet les blocs BSC2 provenant du module SC2. L'unité de traitement MC va également reprendre les données stockées dans la mémoire M1 et dans notre cas qui vont correspondre aux données propres du précédent module de sécurité SC1. Ces données sont transmises sous la forme du bloc BSC1.

Selon un mode de réalisation, le centre de gestion CGS comprend un module de séparation permettant de trier les blocs et les traiter de la manière appropriée. En effet, le module d'entrée est en principe configurer pour vérifier que chaque bloc provient de la même source et donc comprend le même identifiant. C'est pourquoi il est important de séparer les blocs pour qu'ils puissent, en tout cas pour la partie des blocs BSC2, être traité de manière conventionnelle. Le bloc BSC1 aura un traitement spécifique justement dans le but de récupérer des informations sur les modules de sécurité qui ne sont plus connectés.

Afin d'éviter de perdre les informations stockées dans la mémoire du décodeur STB par le remplacement des données propres au nouveau module de sécurité SC2, le centre de gestion dispose d'une commande pour déclencher, dans le module de sécurité connecté au décodeur, l'opération de transfert des données vers le décodeur.

Ainsi, lors d'un changement de module, le nouveau module est initialement non habilité à transférer ses données et les données contenues dans la mémoire M1 restent représentatives du précèdent module de sécurité.

Le centre de gestion va attendre que ces informations lui parviennent selon la méthode décrite plus haut. Une fois ces informations traitées, le centre de gestion envoie une commande pour autoriser le module de sécurité à transmettre ses informations vers le décodeur et ainsi renouveler le contenu de la mémoire M1.

## Revendications

1. Méthode de stockage et de transmission d'informations générées par un premier module de sécurité (SC1) connecté à une unité d'utilisateur (STB), ce premier module de sécurité comprenant un identifiant unique et des informations représentatives de son fonctionnement, ce premier module pouvant être remplacé par un second module de sécurité (SC2), cette méthode comprenant les étapes suivantes:
• détermination des informations spécifiques contenues dans le premier module de sécurité destinées à la transmission,
• transfert de ces informations dans l'unité d'utilisateur,
• stockage de ces informations dans l'unité d'utilisateur,
• remplacement du premier module de sécurité par le deuxième module de sécurité,
• connexion de l'unité d'utilisateur sur un réseau de transmission,
• initialisation d'une communication entre le second module de sécurité et un centre de gestion via l'unité d'utilisateur,
• insertion par l'unité d'utilisateur, d'un bloc de données dans les blocs transmis par le second module, ce bloc comprenant l'identifiant du premier module et les informations spécifiques au dit premier module.

2. Méthode de stockage et de transmission selon la revendication 1, **caractérisée en ce que** le transfert des informations spécifiques du module de sécurité est effectué à intervalle régulier.

3. Méthode de stockage et de transmission selon la revendication 1, **caractérisée en ce que** le transfert des informations spécifiques du module de sécurité est effectué à chaque modification desdites informations.

4. Méthode de stockage et de transmission selon les revendications 1 à 3, **caractérisée en ce que** le transfert des informations spécifiques est stoppé après le remplacement du premier module par le second module de sécurité.

5. Méthode de stockage et de transmission selon la revendication 4, **caractérisé en ce que** le transfert des informations est autorisé dès lors qu'une liaison réussie avec le centre de gestion a été réalisée.

6. Méthode de stockage et de transmission selon la revendication 4, **caractérisé en ce que** le transfert des informations est autorisé par une commande envoyée par le centre de gestion.

## Claims

1. Method of storage and transmission of information generated by a first security module (SC1) connected to a user unit (STB), this first security module comprising a unique identifier and specific information representative of its functioning, this first module being able to be replaced by a second security module (SC2), this method comprising the following steps :
• determination of the specific information contained in the first security module intended for transmission,
• transfer of this information in the user unit,
• storage of this information in the user unit,
• replacement of the first security module by the second security module,
• connection of the user unit on a transmission network,
• initialization of a transfer of information between the second security module and a management center,
• insertion by the user unit, of a data block in the blocks transmitted by the second module, this data block comprising the identifier of the first module and the data specific to said first module.

2. Method of storage and transmission according to claim 1, **characterized in that** the transfer of the specific information of the first security module is carried out at regular interval.

3. Method of storage and transmission according to claim 1, **characterized in that** the transfer of the specific information of the first security module is carried out each time said information is modified.

4. Method of storage and transmission according to any one of the claims 1 to 3, **characterized in that** the transfer of the specific information is stopped after the replacement of the first module by the second security module.

5. Method of storage and transmission according to claim 4, **characterized in that** the transfer of the information is authorized as soon as a successful connection with the management center has been carried out.

6. Method of storage and transmission according to claim 4, **characterized in that** the transfer of the information is authorized by a command sent by the management center.

## Patentansprüche

1. Verfahren zum Speichern und zum Übermitteln von in einem ersten Sicherheitsmodul (SC1) erzeugten Informationen, das mit einer Nutzereinheit (STB) verbunden ist, wobei das erste Sicherheitsmodul über eine eindeutige Benutzeridentifikation und über für seinen Betrieb repräsentative Informationen verfügt, wobei das erste Modul durch ein zweites Sicherheitsmodul (SC2) ersetzt werden kann, wobei das Verfahren die folgenden Schritte aufweist:
• Bestimmen von spezifischen Informationen, die in dem ersten Sicherheitsmodul vorhanden und zur Übermittlung bestimmt sind.
• Übermitteln dieser Informationen in die Nutzereinheit,
• Speichern dieser Informationen in der Nutzereinheit,
• Ersetzen des ersten Sicherheitsmoduls durch das zweite Sicherheitsmodul,
• Einbinden der Nutzereinheit in ein Übermittlungsnetzwerk,
• Initialisieren einer Verbindung zwischen dem zweiten Sicherheitsmodul und einem Verwaltungszentrum über die Nutzereinheit,
• Einfügen eines Datenblockes in die durch das zweite Modul übermittelten Datenblöcke durch die Nutzereinheit, wobei dieser Block die Benutzeridentifikation des ersten Moduls und die zu dem ersten Modul spezifischen Informationen enthält.

2. Verfahren zum Speichern und zum Übermitteln nach Anspruch 1, **dadurch gekennzeichnet, dass** das Übermitteln der spezifischen Informationen des Sicherheitsmoduls in regelmäßigen Intervallen durchgeführt wird.

3. Verfahren zum Speichern und zum Übermitteln nach Anspruch 1, **dadurch gekennzeichnet, dass** das Übermitteln der spezifischen Informationen des Sicherheitsmoduls bei jeder Modifikation dieser Informationen durchgeführt wird.

4. Verfahren zum Speichern und zum Übermitteln nach den Ansprüchen 1 bis 3, **dadurch gekennzeichnet, dass** das Übermitteln der spezifischen Informationen nach dem Ersetzen des ersten Moduls durch das zweite Sicherheitsmodul beendet wird.

5. Verfahren zum Speichern und zum Übermitteln nach Anspruch 4, **dadurch gekennzeichnet, dass** das Übermitteln der Informationen autorisiert wird, nachdem mit dem Verwaltungszentrum erfolgreich eine Verbindung hergestellt worden ist.

6. Verfahren zum Speichern und zum Übermitteln nach Anspruch 4, **dadurch gekennzeichnet, dass** das Übermitteln der Informationen durch einen durch das Verwaltungszentrum gesendeten Befehl autorisiert wird.
